# EUROPEAN PATENT SPECIFICATION

(11) **EP 1 526 770 B1**
(45) Date of publication and mention of the grant of the patent: **27.09.2006**
(21) Application number: 04756489.3
(22) Date of filing: 30.06.2004
(51) Int. Cl.: A01M 1/20, A01N 25/34

(54) **VOLATILE INSECT CONTROL SHEET**
FOLIE ZUR INSEKTENBEKÄMPFUNG
FEUILLE VOLATILE DE CONTROLE D'INSECTES

(30) Priority: 30.06.2003 US 610057
(43) Date of publication of application: 04.05.2005
(73) Proprietor: S. C. Johnson & Son, Inc., Racine, WI 53403 (US)
(72) Inventor: MUNAGAVALASA, Murthy, S., Racine, WI 53406 (US); SKALITZKY, Michael, J., Kenosha, WI 53144 (US); MEIER, Maude, C., Racine, WI 53402 (US); SOSA, Anthony, Racine, WI 53402 (US)
(74) Representative: Ruschke, Hans Edvard
(86) International application number: PCT/US2004/021117
(87) International publication number: WO 2005/004597

(56) References cited:
- WO-A-94/12072
- WO-A-03/031966
- GB-A- 1 516 845
- US-A- 3 685 734
- US-A- 5 487 932
- US-B1- 6 360 477
- US-B1- 6 534 079

## Description

### Technical Field

The present invention relates generally to insect control devices, and more particularly to insect control devices that release a volatile insect control agent.

### Background Art

The release of a volatile ingredient into ambient surroundings has been known for some time. For example, Bishopp et al. European Patent 0670685, assigned to the Beautiful Bouquet Company, discloses a volatile liquid sampler comprising a vapor impermeable base layer and a vapor impermeable cover layer between which a volatile liquid is disposed. An adhesive ring 4 is disposed between the base and cover layers to hold the layers together, thereby inhibiting pre-usage volatilization of the volatile liquid. As an alternative to adhesive, column 9 lines 43-47 disclose that the cover layer may be a polyvinylidene-dichloride cling film that auto-adheres to the base layer. The polymers used to make the base layer are those which absorb the volatile liquid. However, prior to absorbing into the base layer the liquid preferably is retained on the sheet by a surface tension effect, such that the base layer may be immediately handled without undue concern for the liquid volatile spilling off the base layer. To use the sampler, a user separates the base and cover layer, thereby exposing the volatile to the ambient surroundings.

Baker et al. U.S. Patent No. 4,445,641 ("Baker et al.") discloses retention of a fluid volatile in the pores of a micro-porous plastic by capillary action. The rate of evaporation is regulated by the nature of the passages in the micro-porous material to give a zero order rate of release. The micro-porous plastic acts as an evaporation regulating membrane. Baker et al. further discloses a reservoir and a release rate controlling membrane. The reservoir is a solid microporous polymeric structure with interconnected or continuous pores of appropriate diameter to retain the active ingredient therein by a capillary action. The active ingredient is essentially insoluble in the polymer material. Further, a membrane is sealed to an impermeable backing material around the microporous reservoir material impregnated with active.

Many species of insects, especially certain flying insects (e.g., mosquitoes), have posed a nuisance to people for many centuries. Numerous techniques to release a volatile ingredient to control such insects have been developed. Such techniques involve releasing a sufficient concentration of a volatile insect control agent within a volume of airspace to repel or terminate nuisance insects within the airspace. One example of this type of technology is disclosed in Feng U.S. Patent No. 6,239,044, which discloses a mosquito expelling/killing device having a clip to hang the device on a user's body (i.e., clothing). The device includes an electric heater that heats a mosquito incense mat for releasing mosquito killing incense in the vicinity of the user.

Paciorek et al. U.S. Patent No. 3,685,734 discloses a pest repellent article having a heat sealed outer cover layer 12 that may be removed to expose a repellent material carrier 14 having an absorbent member 16 and holes 20 that allow volatilization of the pest repellent composition from the absorbent member 16.

Commonly assigned Munagavalasa U.S. Patent No. 6,534,079 discloses a non-absorbent and inert substrate that is coated with an active insect control ingredient. The active insect control ingredient passively evaporates from the substrate to control flying insects. The active insect control ingredient has a solubility less than 40 micrograms per square centimeter of the substrate, such that the active is not absorbed into the substrate and remains on the surface thereof, thereby promoting volatilization.

Commonly assigned Flashinski et al. U.S. Patent No. 6,360,477 discloses an insect control pouch having a volatile insect control ingredient disposed therein. The pouch may be formed by a single sheet that is folded upon itself and then heat sealed, thereby sandwiching the insect control active between opposed faces of the folded sheet to prevent volatilization of the active prior to opening of the pouch. A user may open the pouch to allow passive evaporation of the insect control ingredient into ambient surroundings. The pouch may be hung from a structure such as a clothes bar in a closet.

There will continue to be a need for volatilizing devices that perform effectively but require only a minimal amount of volatile material. Devices that volatilize all or nearly all of the volatile during the useful life of the device are advantageous from a waste avoidance standpoint and in terms of providing a maximum rate of volatilization. In addition, devices capable of minimizing pre-usage volatilization are similarly beneficial.

### Summary of the Invention

The problems as mentioned above are overcome by the present invention as it is defined in the accompagnying claims.

In accordance with the present invention, an insect control device includes a first substantially non-permeable surface having a first critical surface tension value. An insect control volatile agent is disposed on the first surface and has a surface energy at least about 0.005 N/m (5 dynes/cm) less than the first critical surface tension value. The insect control device includes first and second substantially non-permeable surfaces. A volatile insect control agent is disposed between the surfaces. An attractive property of the agent substantially solely maintains the first surface in releasable contact with the second surface, thereby inhibiting vaporization of the agent.

Other advantages of the present invention will become apparent upon consideration of the following detailed description.

### Brief Description of the Drawings

FIG. 1 is an elevational view of an insect repelling sheet or poster shown in an unfolded state;

FIG. 2 is an isometric view of the sheet of FIG. 1;

FIG. 3A is an elevational view of a sheet having a peripheral barrier;

FIG. 3B is an enlarged fragmentary and diagrammatic sectional view taken along the lines 3B-3B of FIG. 3A;

FIG. 4A is an elevational view of a sheet having an alternative peripheral barrier;

FIG. 4B is an enlarged fragmentary and diagrammatic sectional view taken along the lines 4B-4B of FIG. 4A;

FIGS. 5 and 6 are elevational views generally illustrating any of the sheets of FIGS. 1-4 in an unfolded and a folded condition, respectively;

FIG. 7 is a diagrammatic sectional view taken generally along the lines 7-7 of FIG. 6;

FIG. 8 is a sectional view similar to FIG. 7 but showing separate sheets rather than a folded sheet;

FIG. 9 is a diagrammatic isometric view illustrating a sheet mounted to a wall;

FIG. 10 is an enlarged fragmentary isometric view; and

FIG. 11 is an elevational view taken generally along the view lines 11-11 of FIG. 10.

### Description of the Preferred Embodiments

A volatile liquid insect control agent is disposed on a substantially non-permeable surface 20 of a sheet 23. The control agent has a surface energy at least about 0,005 N/m (5 dynes/cm) less than a critical surface tension value of the surface 20 (i.e., a dyne level differential). In addition, the control agent could also have a surface energy at least about 0,01 N/m (10 dynes/cm) less than the critical surface tension value. The dyne level differential promotes effective wetting of the surface 20 such that the control agent wets all available surface area of the surface 20 in a uniform manner. This effective wetting creates a uniform, thin, continuous film, which promotes maximum volatilization per unit area when the control agent is exposed to ambient surroundings. In a less effectively wetted surface, without the dyne level differential, non-uniformities or pooling in localized areas might occur, which could inhibit optimal volatilization. The rate of volatilization of the control agent remains almost constant until all of the control agent volatilizes.

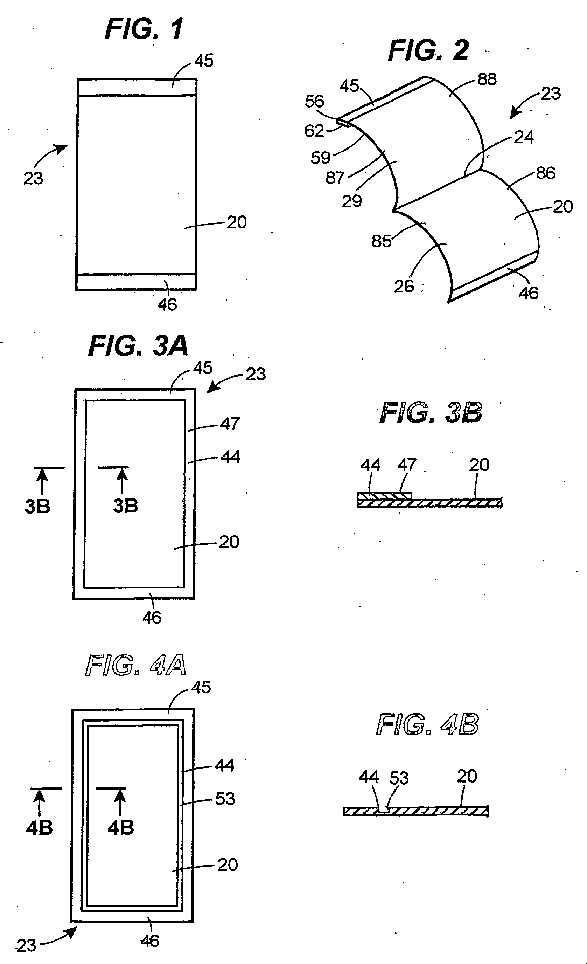

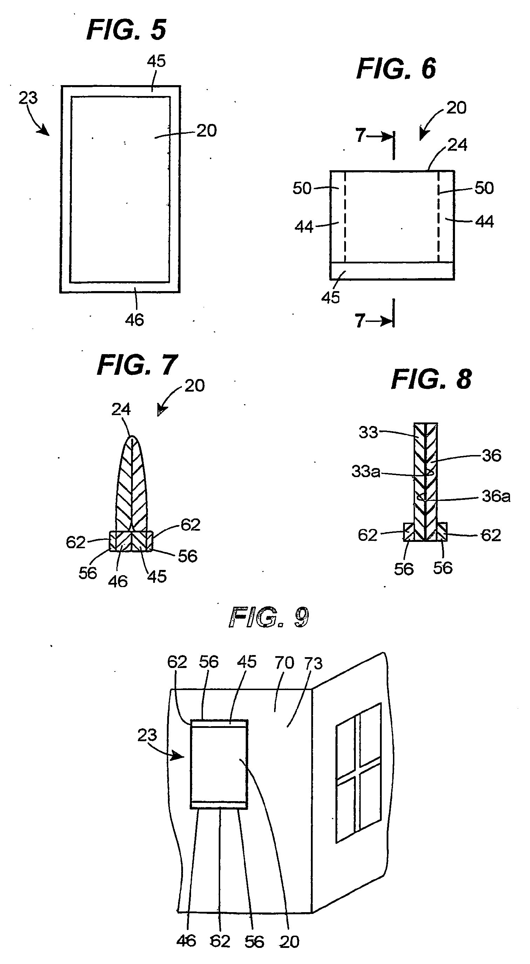

The material of the surface 20 is not particularly important so long as the dyne level differential is satisfied for a control agent of a given surface energy. Any suitable material may be used for the surface 20 such as polymeric or non-polymeric materials including nylon, polyester, or glass. The surface 20 is optimally inert to the volatile liquid. The sheet 23 may have any suitable thickness such as 0.002 inches (0.05 mm). The sheet 23 may be a transparent OPET (oriented polyethylene terepthalate) and may have a surface energy or critical surface tension value greater than about 0,05 N/m (50 dynes/cm). The sheet 23 may have any suitable size such as 10.5 inches (26.67 cm) by 14.5 inches (36.83 cm). The sheet 23 may be folded along a fold line 24, as seen in FIGS. 2 and 7, such that the surface 20 defines first and second opposed surfaces 26, 29. Alternatively, separate sheets 33, 36 (FIG. 8) could define first and second surfaces 33a, 36a. The surfaces 33a, 36a may be formed of the same or different materials. The surface 20 should be substantially non-absorbent so that the control agent is disposed on the surface 20 rather than absorbing into the sheet 23. Such absorbance may be undesirable because an amount of control agent may be indefinitely or permanently retained within the sheet 23 thus wasting control agent. A further advantage of a substantially non-absorbent sheet is that the amount of liquid carried thereby depends on available surface area rather than thickness. For this reason, sheets according to the present invention may be made thin, which can save material and shipping costs.

As noted above, the surfaces 33a, 36a may be formed of different types of materials. In this regard, the material of the surfaces 33a, 36a is not particularly important so long as a given volatile liquid disposed thereon is at least about 0,005 N/m (5 dynes/cm) less than the critical surface tension value of the surfaces 33a, 36a to confer the above-described wetting. The critical surface tension value of the surfaces 20, 33a, 36a is determined using a marker pen sold by Diversified Enterprises 91-N Main Street, Claremont, NH 03743, USA. Typical dyne levels of volatile liquids discussed herein are about 0,035 N/m (35 dynes/cm), thereby requiring the surface 20 to have a surface tension value of about 0,04 N/m (40 dynes/cm) or greater to achieve the at least about 0,005 N/m (5 dynes/cm) differential. Polyester and nylon films tend to be suitable materials for the sheet 23 because these materials typically have surface tension values much greater than 0,04 N/m (40 dynes/cm). There are many suppliers of suitable polyester and nylon films such as MS packaging of Chicago, Illinois. Untreated polypropylene and polyethylene films might not be suitable for 0.035 N/m (35 dynes/cm) liquids because such films tend to have surface energies lower than 0.04 N/m (40 dynes/cm). However, treating films with corona, flame, or other treatments may increase the surface energy sufficiently to establish the requisite dyne level differential. It follows that the present invention encompasses polypropylene, polyethylene, other polymers, or other materials or laminations of the above materials so long as such materials, in combination with a given volatile liquid, satisfy the requisite at least about 0,05 N/m (5 dynes/cm) differential. It should also be noted that even an untreated polyethylene or polypropylene might be suitable where a volatile liquid is selected having a sufficiently low surface energy to satisfy the differential.

An attractive property of the control agent is used to hold the opposed faces 26,29, or separate sheets 33, 36, together in a releasable sealing manner to inhibit pre-usage volatilization of the control agent without the need for separate adhesives, heat seals, or other sealing structure. The attractive property could comprise a capillary force derived from the above-described dyne level differential. Alternatively, the attractive property could be derived from a stickiness or tackiness property of the control agent. Avoiding the need for adhesives or heat seals may be advantageous, especially where end users require a device having only a short storage life.

The insect control agent may include any suitable insect control composition that functions as any of insecticides, knock down agents, or repellents. Suitable insect control compositions may include transfluthrin, tefluthrin, vaporthrin.

The insect control agent may include a solvent in which the transfluthrin or other composition may be dissolved. Suitable solvents are those in which the insect control composition solubilizes completely, and can include hydrocarbon solvents, glycol ethers, etc. Examples of suitable hydrocarbon solvents include hydrocarbon solvents commercially available under the trade names ISOPAR® L, ISOPAR® M, and ISOPAR® V, available from the ExxonMobil Chemical Company. Suitable glycol ethers include Dipropylene glycol n-Butyl Ether marketed as DOWANOL® DPnB solvent; Tripropylene glycol Methyl Ether marketed as DOWANOL® TPM solvent; and Dipropylene glycol Dimethyl Ether marketed as PROGLYDE® DMM solvent. All of these glycol ether solvents are available from the Dow Chemical Company.

Colloidal silica particles may also be dispersed within the solvent to function as a use-up cue (discussed hereinbelow), such as those identified by the mark CAB-O-SIL® and supplied by the Cabot Corporation of Boston, Massachusetts.

A peripheral barrier 44 is provided to one or both of the surfaces 26, 29. The peripheral barrier 44 is provided to prevent the volatile liquid from migrating off the surface 26 as the liquid spreads thereacross by capillary action or other potential forces during production, storage, or movement of the sheet 23. The peripheral barrier 44 could potentially function as an additional grasping surface, in addition to handling tab portions 45, 46, so that a user might handle the sides of the unfolded sheet 23 without touching the volatile liquid. The handling tab portions 45, 46 may be sized appropriately to serve as an effective gripping surface so that a user need not touch the volatile liquid. The tab portions 45, 46 are pulled apart to expose the faces 26, 29 and initiate volatilization. FIGS. 3A, 3B show the peripheral barrier 44 as a peripheral frame layer 47 heat sealed or otherwise bonded to the surface 20 of the sheet 23. The peripheral layer 47 may be constructed of a polypropylene or other suitable sufficiently high modulus material that provides a sufficiently rigid wall or dike to inhibit volatile migration. This may be preferred to a thin overly flexible material. Of course, the peripheral frame layer 47 could be constructed of the same or different material as the sheet 23. The peripheral barrier 44 may also comprise a groove 53 (FIGS. 4A, 4B).

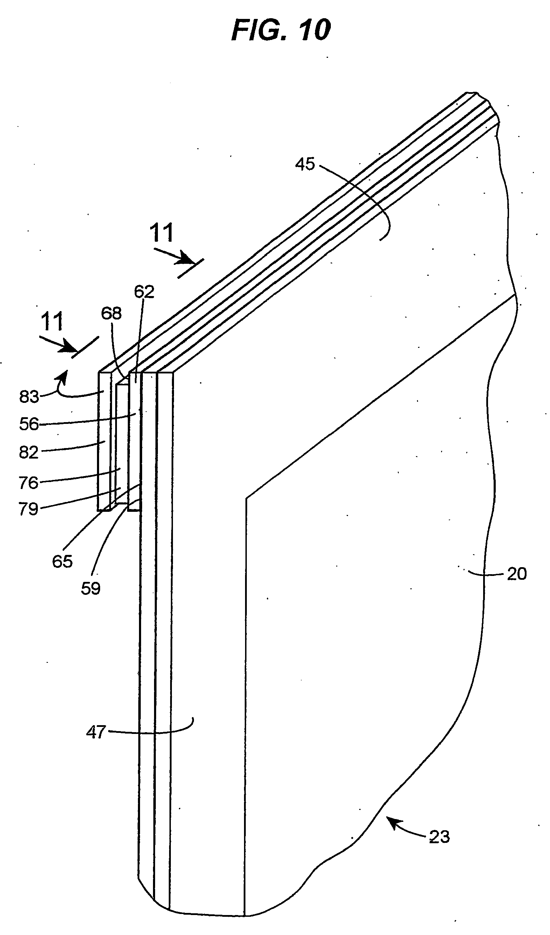

A mounting device 56 (FIG. 10) may be affixed to the sheet 23, preferably on one or both of the handling tab portions 45, 46 on a sheet surface 59 opposite the sheet surface 20. The mounting device 56 is preferably a ½ inch (1.27 cm) wide double-sided tape 62 having first and second adhesive sides 65, 68, the first adhesive side 65 adhered to the sheet surface 59 and the second adhesive side 68 capable of adhering to a support surface 70 such as a wall 73 as seen in FIG. 8. Such double-sided tapes are available from the Minnesota Mining & Manufacturing Company (i.e., 3M) such as 3M's repositionable Tape 9415PC or Tape 9425PC. The first permanent side 65 of the tape 62 remains firmly affixed to the sheet 23 and the repositionable second side 68 can be affixed to a number of support surfaces such as windows, painted walls, surfaces of wooden doors and furniture etc. While a double-sided tape is preferred, any other suitable means of mounting or hanging the sheet 23 to a support surface are within the scope of the invention.

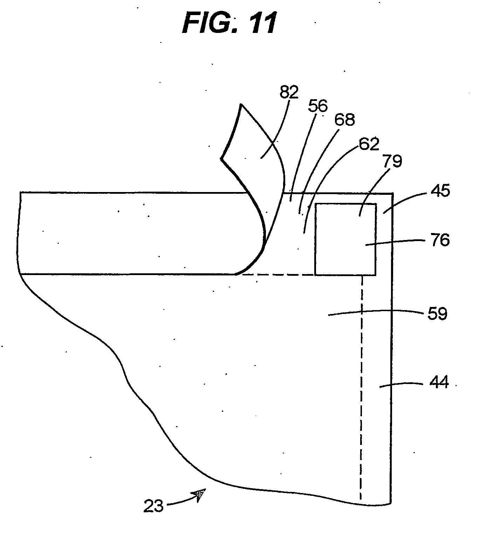

The sheet 23 may further include a use-up cue 76 (FIGS. 10, 11) that indicates to a user that the sheet 23 has volatilized all or nearly all of the volatile liquid therefrom. For example, if CAB-O-SIL® colloidal silica particles are included in the above solvents, evaporation of volatile liquid leaves behind such particles as a white residue indicating full volatilization to a user. Alternatively, the use-up cue 76 can be a color change sticker 79. The sticker 79 may include a liner 82 that is removed by a user at or about the same time the faces 26, 29 are separated. The liner 82 may be removed by pulling in the direction of an arrow 83 (FIG. 10). When the liner 82 is removed, the sticker 79 displays a first color (e.g., red). After a predetermined time, at or near full volatilization of the liquid from the sheet surface 20, the sticker 79 changes to a second color (e.g., green) indicating to a user that the useful life of the sheet 23 has expired. The color change sticker 79 could incorporate text, such as the word "discard" that would appear after a predetermined time wherein the text signals the user that the useful life of the sheet 23 has expired. Stickers employing this general type of color change technology are available from Temtec, a division of Brady Worldwide, Suffern, New York, 10901, USA, and may be marketed under the mark TEMPbadge®. While a color change sticker may be used as a use-up cue, any other suitable form of use-up cue or indicator may be used. For example, the liquid volatile could incorporate a fragrance, such as a floral or citrus scent, that becomes less odorous over time. At or near full volatilization, the fragrance is not detectable by the average user signaling the need for replacement of the sheet 23. The liner 82 for the sticker 79 may also line the double-sided tape 62 as shown in FIGS. 10 and 11. Peeling of the liner 82 to expose the second adhesive side 68 exposes the sticker 79 to ambient air. The color change sticker 79 preferably changes from the first color to the second color following a predetermined period approximately equal to the useful life of the sheet 23. In this regard, the sheet 23 preferably volatilizes at an effective concentration to control insects for the useful life of the sheet 23.

Following application of the liquid to the surface 20 of the sheet 23, the sheet 23 is folded along the fold line 24, thereby bringing opposed faces 26, 29 of the surface 20 into sealing contact as seen in FIG. 7. The attraction of the liquid to the surface 20 holds the opposed faces 26, 29 together, thereby maintaining the sheet 23 in the folded condition with the faces 26, 29 pressed or adhered together in a uniform sealing manner that effectively inhibits pre-usage volatilization. This attractive property can be described as a capillary force. The capillary force of the liquid is sufficiently strong to releasably press or adhere the faces 26, 29 together in a manner that inhibits or substantially inhibits pre-usage volatilization such that the sheet 23 is supplied to users without the need for additional sealing structure (e.g., an adhesive seal).

In accordance with the principles expressed hereinabove and below, a method of producing an insect control device comprises wetting a first surface such as the surface 20 with a control agent to form a thin substantially continuous film on the surface 20. The control agent has a surface energy at least about 0.005 N/m (5 dynes/cm) less than the critical surface tension value of the surface. In addition, the surface energy may be at least about 0.01 N/m (10 dynes/cm) less than the surface tension value. A second surface is applied to the first surface. This could involve bringing the opposed face 29 against the face 26 or bringing the separate sheets 33, 36 together. The volatile liquid control agent, which may comprise transfluthrin or other suitable compositions, is then pipetted into the pouch. The volatile liquid insect control agent thereafter contacts the surface 20 spreading uniformly as discussed hereinabove. A mounting device and/or use-up cue may also be provided.

### EXAMPLES

### EXAMPLE 1

Two 10.5 inch (26.7 cm) x 14.5 inch (36.8 cm) sheets were coated with 112.6 mg of an insect control agent consisting of 83.5% (by weight) transfluthrin and 16.5% dipropylene glycol dimethyl ether (PROGLYDE®) DMM. The transfluthrin was 95.8% pure technical grade Transfluthrin. Two nylon screened 10 inch (25 cm) X 10 inch X 10 inch cages each containing twenty 14-day-old female *Culex quinquefasciatus* mosquitoes were placed in a 20 m³ enclosed square testing room. One of these cages was disposed in a high position, 168 cm above the floor, while the other cage was disposed in a low position, 46 cm above the floor. The high position cage was spaced 1 m from the South wall and 86 cm from the West wall. The low position cage was spaced 1 m from the North wall and 86 cm from the East wall. Unless otherwise specified, prior to placement of the mosquitoes within the cages, the air in the testing room was purged with exhaust apparatus. The sheets were placed on a wall of the testing room 5 feet (1.52 m) above the floor. As seen in Table 1 below, the sheets achieved a mean knockdown of 51 % two hours after placement in the room. Unless otherwise specified, the testing procedure for each of the following examples was identical to that of Example 1.

### EXAMPLE 2

The sheets of Example 2 were identical to those of Example 1 with the exception that the Example 2 sheets were left in the room for two hours (without any air purging) accumulating control agent concentration therein before introducing mosquitoes into the cages. Table 1 shows that two hours after introduction of the mosquitoes, a 78% mean knockdown was achieved.

### EXAMPLE 3

The sheets of Example 3 were identical to those of Example 1 with the exception that the Example 3 sheets were left in the testing room for 7 days. During this seven day period, the air was purged from the testing room for 15 minutes each day to simulate air exchange in a typical household. After the 7 days, mosquitoes were placed in the cages four hours after purging the air in the testing room, and, as shown in Table 1 below, a mean knockdown of 100% was achieved two hours thereafter.

### EXAMPLE 4

Two 10 inch (25.4 cm) X 14 inch (35.5 cm) polypropylene sheets each having a treated area of 120 in² (about 774 cm²) were provided. A solution of 104.3 mg pure Transfluthrin, 3 mg of Takasago RD-1436 Instant Release Fragrance, and 7.6 mg of dipropylene glycol dimethyl ether (PROGLYDE®) DMM was applied to the treated area of each sheet. The fragrance is available from Takasago International of New Jersey, USA. As seen in Table 1 below, the sheets of Example 4 achieved a mean knockdown of 96% after two hours.

### EXAMPLE 5

Two 10 inch (25.4 cm) X 22 inch (55.8 cm) ultraclear polyester sheets were employed. Each of these sheets had a polypropylene frame layer bounding a 185 in² (1193.5 cm²) treated area. A solution of 208.7 mg of transfluthrin and 41.2 mg of dipropylene glycol dimethyl ether (PROGLYDE®) DMM was applied to the treated area. These sheets were tested using the same procedure of Example 1. The sheets of Example 5 achieved a mean knockdown of 78% two hours after placement in the testing room.

### EXAMPLE 6

The sheets of Example 6 were identical to those of Example 5 except that the Example 6 sheets were left in the testing room for 15 days. During this 15 day period, the air was purged for 15 minutes each day. After the 15 days, mosquitoes were placed in the cages and, as shown in Table 1 below, a mean knockdown of 99% was achieved two hours after placement of the mosquitoes therein.

### COMPARATIVE EXAMPLE A

Comparative Example A is an electric liquid repellent heater having a plug that fits into an electrical outlet, a liquid reservoir containing a 6% Pynamin Forte solution, and a ceramic wick in communication with the liquid reservoir and an electrical heater powered by 220VAC. Such repellent heaters are advertised as capable of providing effective insect repellency for 45 nights and are available from Zobele Industrie Chimiche of Trento, Italy. The device of Comparative Example A was "aged" 24 hours before introduction of the mosquitoes into the cages meaning the device was operated for 24 hours within the 20 m³ testing room and subjected to one 15 minute air purging during the 24 hour period immediately prior to introduction of mosquitoes into the cages.

### COMPARATIVE EXAMPLE B

Comparative Example B was a mat 2.5 mm thick impregnated with 40 mg Pynamin Forte, 40 mg of piperonyl butoxide ("PBO"), and 20 mg of an m-phthalodinitrile ("IPM"). Such mats are also available from Zobele Industrie Chimiche. The mat was heated with a conventional electric heater identified as a Vape Fumakilla PTC heater and powered by 110VAC. The mat was disposed on the floor of the testing room. The mosquitoes were placed in the cages at the same time the mat was initially heated.

As seen in Table 1, the control did not exhibit any knockdown of mosquitoes. The control consisted of introducing mosquitoes into the cages after purging of the testing room without any insecticide in the testing room.

**Table 1**

| **Example** | **Age** | **Pre-Exposure** | **15 min.** | **30 min.** | **45 min.** | **60 min.** | **75 min.** | **90 min.** | **105 min.** | **120 min.** |
|---|---|---|---|---|---|---|---|---|---|---|
| 1 | Day 1 | None | 0 | 3 | 5 | 8 | 21 | 34 | 43 | 51 |
| 2 | Day 1 | 2 hours | 28 | 51 | 65 | 69 | 71 | 71 | 74 | 78 |
| 3 | 7-days-old | 4 hours | 64 | 79 | 94 | 98 | 98 | 100 | 100 | 100 |
| 4 | Day 1 | None | 0 | 3 | 5 | 19 | 58 | 76 | 90 | 96 |
| 5 | Day 1 | None | 0 | 10 | 16 | 28 | 49 | 64 | 69 | 78 |
| 6 | 15-days-old | None | 0 | 0 | 8 | 30 | 64 | 84 | 94 | 99 |
| Comparative Example A | 24 hours | None | 0 | 0 | 0 | 20 | 48 | 68 | 68 | 70 |
| Comparative Example B | Day 1 | None | 0 | 36 | 46 | 50 | 60 | 66 | 72 | 74 |
| Control | N/A | None | 0 | 0 | 0 | 0 | 0 | 0 | 0 | 0 |

### Industrial Applicability

As discussed above, the present invention is not limited to folded sheets and may encompass separate sheets or layers constructed of the same or different materials. Also, volatilization performance of a given sheet may vary. In addition, a broad variety of sheet sizes is possible. Numerous modifications to the present invention will be apparent to those skilled in the art in view of the foregoing description. Accordingly, this description is to be construed as merely exemplary of the inventive concepts taught herein and is presented for the purpose of enabling those skilled in the art to make and use the invention and to teach the best mode of carrying out same. The exclusive rights to all modifications which come within the scope of the appended claims are reserved.

## Claims

1. An insect control device, comprising:
a first non-permeable surface (26; 33a) of a sheet (23,33) having a first critical surface tension value;
a second non permeable surface (29; 36a) of a sheet (23,36) applied to the first surface and having a second critical surface tension value; and
a liquid insect control volatile agent disposed between the first and second surfaces; wherein
the control agent has a surface tension of at least 0,005 N / m (5 dynes/cm) less than the first critical surface tension value and the second critical surface tension value;
**characterized in that**
an attractive property of the control agent maintains the first surface in releasable contact with the second surface, thereby inhibiting vaporisation of the agent without the need for separate adhesives, heat seals, or other sealing structure; and that
a peripheral barrier (44) is provided on one or both of the first and second surfaces comprising a frame layer (47) forming a rigid wall on the surface or a groove (53), the peripheral barrier being to prevent the volatile agent from migrating off the surfaces.

2. The device of claim 1, wherein the agent has a surface energy of at least 0,01 N/m (10 dynes/cm) less than the first critical surface tension value.

3. The device of claim 1, wherein the first and second surfaces are defined by first (26) and second (29) opposed faces, respectively, of a folded sheet (23).

4. The device of claim 1, wherein the first (33a) and second (36a) surfaces are defined by first (33) and second (36) separate sheets, respectively.

5. The device of claim 1, wherein the attractive property of the control agent comprises a capillary force.

6. The device of claim 1, wherein the insect control agent comprises transfluthrin, tefuthrin, or vaporthrin.

7. The device of claim 1, wherein the first and second surfaces are bonded at the peripheral barrier (44) by a releasable heat seal (50).

8. The device of any preceding claim further comprising a layer of double sided tape (62), on a side opposite the control agent for mounting the device on a surface.

9. The device of any preceding claim further including a use-up cue (76) comprising colloidal silica particles, a colour change sticker, or a fragrance.

## Patentansprüche

1. Vorrichtung zur Insektenbekämpfung mit:
einer ersten, undurchlässigen Oberfläche (26; 33a) eines Bogens (23, 33), die einen ersten kritischen Wert der Oberflächenspannung hat;
einer zweiten, undurchlässigen Oberfläche (29; 36a) eines Bogens (23, 36), die auf die erste Oberfläche aufgebracht ist und einen zweiten kritischen Wert der Oberflächenspannung aufweist; und
einem flüssigen flüchtigen Wirkstoff zur Insektenbekämpfung, der zwischen der ersten und der zweiten Oberfläche angeordnet ist;
wobei der Wirkstoff eine Oberflächenspannung hat, die mindestens 0,005 N/m (5 dynes/cm) niedriger als der erste und der zweite kritische Wert der Oberflächenspannung ist;
**dadurch gekennzeichnet, dass**
eine Anziehungseigenschaft des Wirkstoffs die erste Oberfläche lösbar in Berührung mit der zweiten Oberfläche hält, so dass ein Verdunsten des Wirkstoffs verhindert ist, ohne dass separate Klebstoffe, Schweißungen oder andere Verschlüsse erforderlich wären, und dass
auf der ersten oder der zweiten Oberfläche oder beiden eine Außenrandsperre (44) vorgesehen ist, die eine Rahmenschicht (47) aufweist, die auf der Oberfläche eine starre Wandfläche oder eine Nut (53) bildet, wobei die Außenrandsperre vorgesehen ist, um eine Wanderung des flüchtigen Wirkstoffs von den Oberflächen weg zu verhindern.

2. Vorrichtung nach Anspruch 1, bei der der Wirkstoff eine Oberflächenergie von mindestens 0,01 N/m (10 dynes/cm) unter dem ersten kritischen Wert der Oberflächenspannung hat.

3. Vorrichtung nach Anspruch 1, bei der die erste und die zweite Oberfläche von einer ersten Seite (26) bzw. einer zweiten Seite (29) eines gefalteten Bogens (23) gebildet sind, die einander zugewandt liegen.

4. Vorrichtung nach Anspruch 1, bei der die erste und die zweite Oberfläche (33a bzw. 36a) von einem ersten Bogen (33) bzw. einem zweiten Bogen (36) gebildet sind, die voneinander getrennt sind.

5. Vorrichtung nach Anspruch 1, bei der die Anziehungseigenschaft des Wirkstoffs eine Kapillarkraft beinhaltet.

6. Vorrichtung nach Anspruch 1, bei der es sich bei dem Wirkstoff zur Insektenbekämpfung um Transfluthrin, Tefluthrin oder Vaporthrin handelt.

7. Vorrichtung nach Anspruch 1, bei der die erste und die zweite Oberfläche an der Außenrandsperre (44) mittels einer lösbaren Schweißnaht (50) miteinander verbunden sind.

8. Vorrichtung nach einem der vorgehenden Ansprüche, weiterhin mit einer Lage doppelseitigen Klebebandes (62) auf einer vom Wirkstoff abgewandten Seite, um die Vorrichtung auf einer Oberfläche anzubringen.

9. Vorrichtung nach einem der vorgehenden Ansprüche, weiterhin mit einer Aufbrauchanzeige (76), die Kolloid-Kieselerde, einen Farbwechselaufkleber oder einen Duftstoff aufweist.

## Revendications

1. Dispositif de contrôle d'insectes, comprenant :
une première surface non perméable (26,33a) d'une feuille (23,33) ayant une première valeur de tension de surface critique ;
une seconde surface non perméable (29,36a) d'une feuille (23,36) appliquée sur la première surface et ayant une seconde valeur de tension de surface critique ; et
un agent volatil liquide de contrôle d'insectes disposé entre la première et la seconde surface ; dans lequel
l'agent de contrôle a une tension de surface d'au moins 0,005 N/m (5 dynes/cm) de moins que la première valeur de tension de surface critique et que la seconde valeur de tension de surface critique;
**caractérisé en ce que**,
une propriété attractive de l'agent de contrôle maintient la première surface en contact, détachable, avec la seconde surface, ce qui empêche la vaporisation de l'agent sans qu'il soit nécessaire d'avoir des adhésifs séparés, des joints thermocollants ou une autre structure de scellage, et
une barrière périphérique (44) est disposée sur une des première et seconde surfaces ou sur les deux, barrière comprenant une couche d'encadrement (47) formant une paroi rigide sur la surface ou une rainure (53), la barrière périphérique étant destinée à empêcher la migration de l'agent volatil depuis les surfaces.

2. Dispositif selon la revendication 1, dans lequel l'agent a une énergie superficielle d'au moins 0,01 N/m (10 dynes/cm) de moins que la première valeur de tension de surface critique.

3. Dispositif selon la revendication 1, dans lequel la première et la seconde surfaces sont définies par les première (26) et seconde (29) faces opposées, respectivement, d'une feuille pliée (23).

4. Dispositif selon la revendication 1, dans lequel la première (33a) et la seconde (36a) surfaces sont définies par une première (33) et une seconde (36) feuilles séparées, respectivement.

5. Dispositif selon la revendication 1, dans lequel la propriété attractive de l'agent de contrôle comprend une force capillaire.

6. Dispositif selon la revendication 1, dans lequel l'agent de contrôle comprend de la transfluthrine, de la téfluthrine ou de la vaporthrine.

7. Dispositif selon la revendication 1, dans lequel les première et seconde surfaces sont reliées au niveau de la barrière périphérique (44) par un joint thermocollant détachable (50).

8. Dispositif selon l'une quelconque des revendications précédentes comprenant en outre une couche d'adhésif double face (62) sur un côté opposé à l'agent de contrôle, pour coller le dispositif sur une surface.

9. Dispositif selon l'une quelconque des revendications précédentes incluant en outre un signal de fin de durée de vie (76) comprenant des particules de silice colloïdale, une étiquette changeant de couleur ou un parfum.
